# EUROPEAN PATENT APPLICATION

(11) **EP 1 342 611 A1**
(43) Date of publication of application: **10.09.2003**
(21) Application number: 02004896.3
(22) Date of filing: 04.03.2002
(51) Int. Cl.: B60N 2/36

(54) **Flexible interior arrangement for a vehicle**

(71) Applicant: Ford Global Technologies, Inc., Dearborn, Michigan 48126 (US)
(72) Inventor: Dale, Jonathan, 41764 Göteborg (SE)
(74) Representative: Spitmann, Knut Hermann

(57) **Abstract**

A flexible interior arrangement is provided for a vehicle, the vehicle defining a forward and a rearward direction. The arrangement comprises a first seat (12) having a first back portion (13); a second seat (14) located behind the first seat (12), the second seat (14) having a second back portion (16) and a seat bottom portion (34); wherein the second back portion (16) is translatable between a rearward normal seating position and a forward position in which the second back portion (16) translates forwardly of the seat portion (34). The translation of the second back portion (16) together with a translatable load floor (24,32) results in an increased load-carrying space.

## Description

The present invention relates to flexible interior arrangements for vehicles, and more particularly to a flexible interior arrangement including a translatable seat back portion.

### Technical Background

In a vehicle, particularly a motor vehicle such as an estate car or sport-utility vehicle, flexibility is increasingly valued by customers. In particular, flexibility in the interior configuration of the vehicle is highly valued. One especially advantageous interior arrangement is one which can allow the owner of the vehicle to trade off between seating space and load-carrying space, depending upon the circumstances.

### Description of the Invention

It is therefore an object of the present invention to provide a flexible interior arrangement for a vehicle, particularly one which allows the owner of the vehicle to trade off between seating space and load-carrying space.

This object is provided by the invention specified in independent Claim 1. Further embodiments and optional features are detailed in the subsequent independent Claims.

### Brief Description of the Drawings

Figure 1 illustrates a rear view of the interior of a vehicle containing a flexible interior arrangement according to one embodiment of the present invention.
Figure 2 illustrates part of the interior of the vehicle with back portion 26 of second row seat 22 translated partly between its fully forward and fully rearward positions.
Figure 3 illustrates part of the interior of the vehicle with seat back portion 16 of second row seat 14 translated to its fully-forward position, in close proximity with seat back portion 13 of front row seat 12.
Figure 4 illustrates a rear view of the interior of the vehicle with seat back portions 16 and 26 in their fully-forward positions, but with translatable load floor 24 removed for clarity of illustration.
Figure 5 illustrates more detail of second row seat 22, translatable load floor 24, fixed load floor 20 and related components
Figure 6 illustrates the slideable retention of beam 40 in guide 56.

### Detailed Description of the Preferred Embodiments

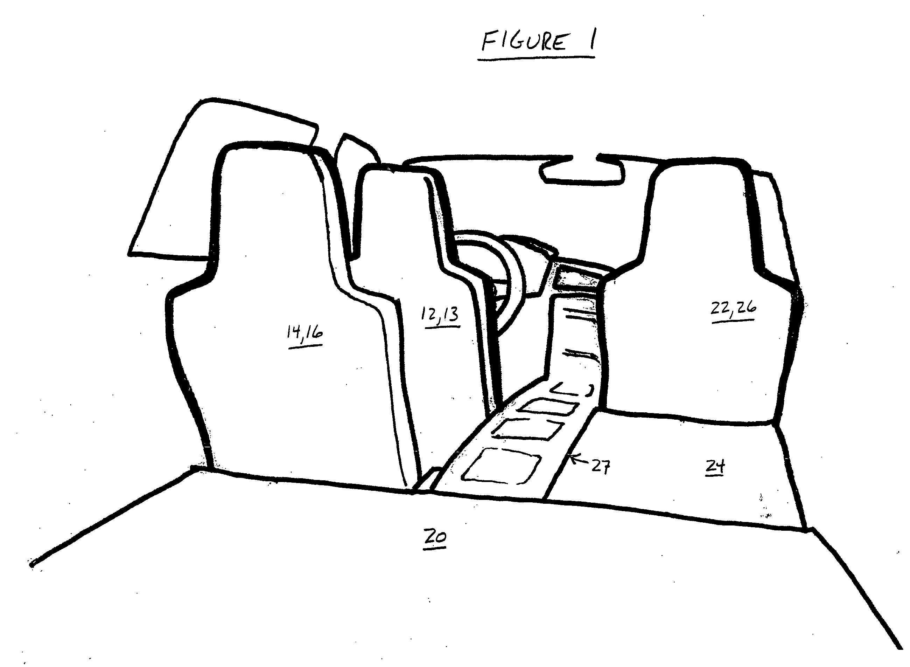

Refer first to Figure 1. The interior of a vehicle such as an estate car or a sport-utility vehicle includes front seat 12 arranged as a part of a first seating row in the vehicle. Front seat 12 has generally-vertical seat back portion 13. Further, the vehicle includes second row seat 14 in a second row in the vehicle, the second row located behind the first row. Second row seat 14 has a generally-vertical seat back portion 16. As illustrated in Figure 1, seat back portion 16 is located in its rearward-most position, the normal position in which an occupant would be seated in said seat. Behind second row seat 14 is a load floor 20, said load floor 20 being fixed; that is load floor 20 is mounted to the body of the vehicle such that it is not designed to be translatable forward and/or rearward.

Also illustrated in Figure 1 is another second row seat 22, this seat located in the second row in the vehicle and having a generally-vertical seat back portion 26. Second-row seat 22 is located behind a second front row seat (not visible in Figure 1, because it is obstructed by seat back portion 26). Seat back portion 26 is translated forward as shown in Figure 1, exposing a translatable load floor 24.. Translatable load floor 24 is fully forward of, and preferably substantially, flush with fixed load floor portion 20 when seat back portion 26 is translated to its full-forward position, creating a substantially flat and uninterrupted load floor comprising translatable load floor portion 24 and fixed load floor portion 20. For convenience, a console 27 is disposed forward-rearward between the seats located on the "driver's side" (that is, left as viewed in Figure 1) and the seats located on the "passenger side" (that is, right as viewed in Figure 1). While translated forward, seat back portion 26 preferably remains substantially vertical, as shown in Figure 1.

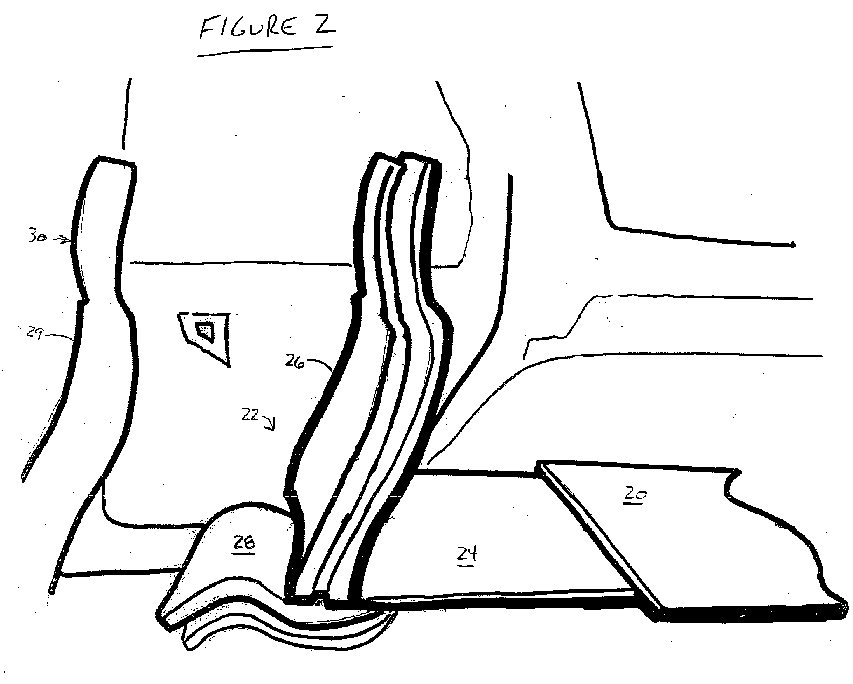

Refer now additionally to Figure 2. Seat back portion 26 of second row seat 22 is translatably mounted to allow forward and rearward translation of seat back portion 26, the translatable mounting being accomplished in a manner to be described further below. It should be noted that seat back portion 26 of second row seat 22 is not fixedly coupled to seat bottom portion 28 of second row seat 22, which is preferably fixedly and immovably attached to the body of the vehicle. Thus, in the preferred embodiment of the present invention, seat back portion 26 of second row seat 22 can be translated forwardly from its normal rearward seating position, independently of bottom portion 28 of second row seat 22. In the position illustrated in Figure 2, back portion 26 of second row seat 22 is translated partially forward from its rearward normal seating position. Coupled for translation with back portion 26 of second row seat 22 is translatable load floor 24. Thus, translatable load floor 24 translates forward with forward translation of seat back portion 26.

It should be noted from Figure 2 that translatable load floor 24 slides out from under fixed load floor 20, where translatable load floor 24 is located when seat back portion 26 is translated to its rearward normal seating position.

Visible also in Figure 2 is back portion 29 of a front-row seat 30. Because front-row seat 30 is located on the passenger side of the vehicle, back portion 29 is obscured from view in Figure 1.

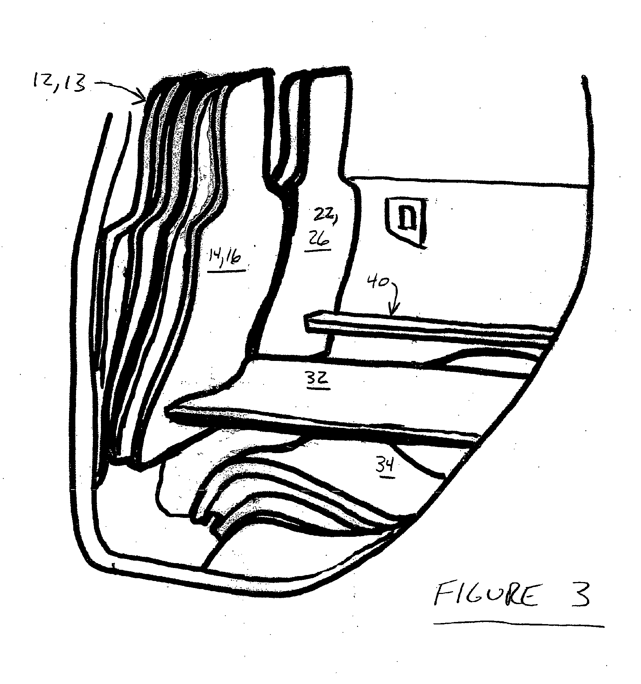

Refer additionally now to Figure 3. Here is shown back portion 16 of second row seat 14 translated to its fully-forward position. In this case, translatable load floor 32, located behind and coupled for translation with seat back portion 16, is visible, as is bottom portion 34 of second row seat 14. Also visible in the background in Figure 3 is seat back portion 26 of second row seat 22, also translated to its fully-forward position. Translatable load floor portion 24 is removed in Figure 3 simply for the purposes of subsequent illustration of the construction of this embodiment of the present invention.

Figure 3 illustrates that back portion 16 preferably translates very closely to seat back 13 of front row seat 12 when seat back portion 16 is translated fully forward. Ideally, seat back 13 of front row seat 12 and seat back portion 16 have substantially identical profiles so seat back portion 16 can "nest" with seat back 13 of front row seat 12, allowing movement of seat back portion 16 as far forward as possible. Preferably, back portion 16 moves at least as close as 75 millimeters to seat back 13 of front row seat 12, and more preferably, within 25 millimeters. Such close nesting of seat back portion 16 with seat back 13 of front row seat 12 provides maximum space efficiency.

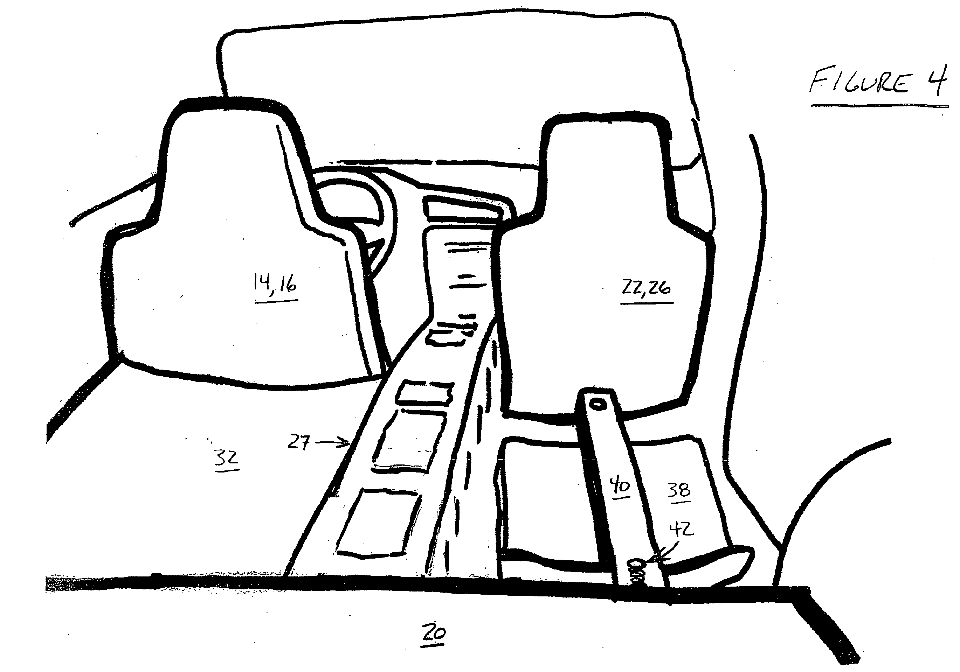

Refer now additionally to Figure 4. Here is shown a rear view into the passenger compartment of the vehicle with seat back portions 16 and 26 of second row seats 14 and 22 in their forward-most positions. Further, while translatable load floor 32 is shown in place, translatable load floor 24 on the passenger side of the vehicle is removed merely to show more detail about the construction of this embodiment of the present invention - removal of neither translatable load floor is germaine to this embodiment of the present invention. As should be apparent from the foregoing discussion but will be reiterated here, translatable load floor 32 is preferably fully forward of, and substantially flush with, fixed load floor 20 when seat back portion 16 is in its fully-forward position, as here. Also, a feature clearly apparent in Figure 4 is the translation of seat back portion 26 forward of seat bottom portion 38 of second row seat 22 when seat back portion 26 is in its forward-most position. Also illustrated is a beam 40 which is fixedly coupled to the rear of seat back portion 26, which beam 40 together with seat back portion 26 is guided during seat back portion 26's forward and rearward translation. Beam 40 is guided by being translatably mounted to the body of the vehicle as will be illustrated below. Attached to beam 40 is a coil spring 42. Translatable load floor 24 is mounted on beam 40, including the rearmost portion of translatable load floor 24, which is located on spring 42. When seat back portion 26 is in its fully-forward position, moving translateable load floor 24 fully forward, spring 42 urges the rear edge of translatable load floor 24 upward, so that the rear edge is substantially flush with fixed load floor 20.

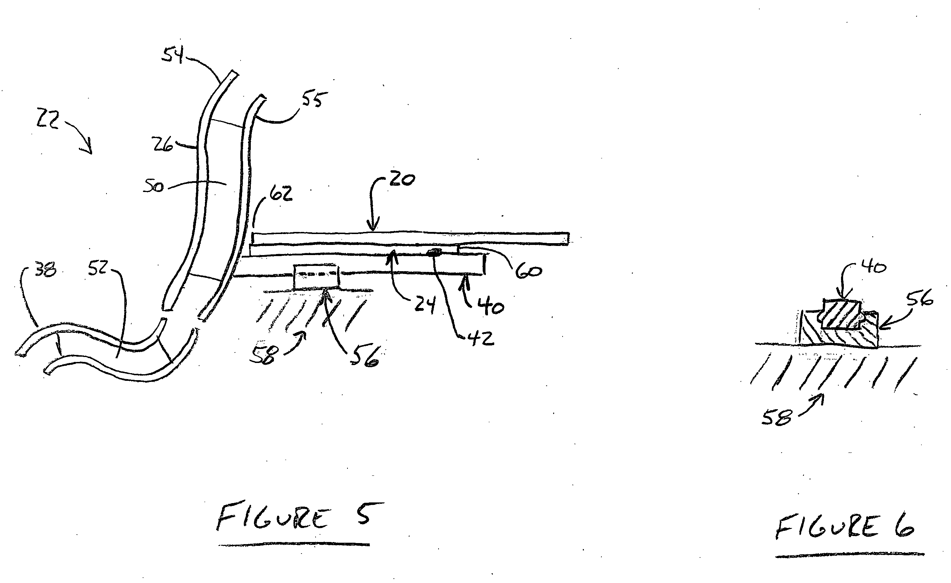

To further illustrate the construction of this embodiment of the present invention, reference is now made additionally to Figures 5 and 6, Here is shown second row seat 22, comprising seat back portion 26 and seat bottom portion 38. (Although second row seat 22 is used for discussion here, second row seat 14 and related components illustrated in Figures 5 and 6 preferably have identical construction.) Suitable frames 50 and 52 are provided for seat back portion 26 and seat bottom portion 38. In this embodiment of the present invention, seat back portion 26 comprises two compound-curved portions 54 and 55 each made of laminated wood, supported by frame 50. A similar construction is illustrated for seat bottom portion 38.

Beam 40 is fixedly attached to the rear of seat back portion 26 of second row seat 22. Beam 40 is slideably retained in one or more guides 56 which are fixedly attached to the vehicle body 58 by any appropriate means, such as welding or fasteners. (Figure 6 is a cross-sectional view of beam 40 as slideably retained in a guide 56.) Translatable load floor 24 and fixed load floor 20 are also illustrated in Figure 5. Spring 42 is compressed because translatable load floor 24 is beneath fixed load floor 20 when seat back portion 26 is in its rearmost normal seating position. As discussed previously, when seat back portion 26 is translated to its fully-forward position, rear edge 60 of translatable load floor 24 moves slightly forward of front edge 62 of fixed load floor 20. Thus, spring 42 then forces the rear edge 60 of translatable load floor 24 upward and substantially flush with fixed load floor 20. Of course, for spring 42 to be able to force the rear portion of translatable load floor 24 upward, mounting of translatable load floor 24 on beam 40 should via a joint which allows a small amount of rotation about the front edge of translatable load floor 24.

In operation of this embodiment of the present invention, when the operator of the vehicle requires enlarged load-carrying space in the vehicle, he can translate one or both of seat back portions 16, 26 forwardly, preferably to their fully-forward positions. This translates translatable load floors 24 and/or 32 forward, enlarging the load carrying space in the vehicle. When the added load-carrying space is no longer needed, seat back portions 16 and 26 can be translated back to their rearward normal seating positions. To begin this process of translating seat back portions 16 and/or 26 to their rearward normal seating positions, the rearward portion of the relevant translatable load floor 24 and/or 32 is pushed downward against the force of the relevant spring (spring 42 in the case of translatable load floor 24). This moves the rear edge of the translatable load floor (rear edge 60 in the case of translatable load floor 24) below the front edge 62 of fixed load floor 20. The relevant seat back portion 16, 26 can then be pushed rearward to its normal rearward seating position. Rearward translation of the seat back portion 16, 26 thus translates the relevant translatable load floor 24, 32 rearwardly again, motivated by the rearward movement of seat back portion 16, 26, to regain its stowed position beneath and substantially parallel to fixed load floor 20.

As will be apparent from the Figures, especially Figures 2, 3 and 5, seat back portions 16 preferably have a compound-curved profile. As the foregoing discussion has made apparent, the seat back portions of the front-row seats also preferably have substantially similar compound-curved profiles, to facilitate the close nesting of the seat back portions when 16 and/or 26 are translated fully forward. The front-row seats are also preferably of substantially the same construction as described for the second-row seats (laminated wood mounted on an appropriate frame), although a design wherein the seat backs of the front row seats can translate independently of the seat bottoms of the front row seats is, of course, not relevant.

It should be understood that the foregoing description illustrates exemplary embodiments of the present invention, and that the scope of the invention is instead defined by the appended claims.

## Claims

1. A flexible interior arrangement for a vehicle, said vehicle defining a forward and a rearward direction, said arrangement comprising:
a first seat (12) having a first back portion (13);
a second seat (14) located behind said first seat (12), said second seat (14) having a second back portion (16) and a seat bottom portion (34), **characterized in that** said second back portion (16) is translatable between a rearward normal seating position and a forward position in which said second back portion (16) translates forwardly of said seat bottom portion (34).

2. A flexible interior arrangement as recited in Claim 1, **characterized in that** in said forward position, said second back portion (16) is located less than 75 millimeters from said first back portion (13).

3. A flexible interior arrangement as recited in Claim 2, **characterized in that** in said forward position, said second back portion (16) is located approximately 25 millimeters from said first back portion (13).

4. A flexible interior arrangement as recited in any of the preceding Claims, **characterized in that** said first back portion (13) and said second back portion (16) have substantially identical profiles.

5. A flexible interior arrangement as recited in Claim 4 **characterized in that** said profiles comprise compound curves.

6. A flexible interior arrangement as recited in any of the preceding Claims, **characterized in that** in said forward position, said second back portion (16) nests with said first back portion (13).

7. A flexible interior arrangement as recited in any of the preceding Claims, **characterized in that** said arrangement further comprises a translateable load floor (32) located rearwardly of said second back portion (16) and coupled for forward-rearward translation with corresponding forward-rearward translation of said second back portion (16).

8. A flexible interior arrangement as recited in Claim 7, **characterized in that** said arrangement further comprises a fixed load floor (20) located behind said second seat (14), and said translatable load floor (32) is at least partially translated beneath said fixed load floor (20) when said second back portion (16) is in said rearward normal seating position.

9. A flexible interior arrangement as recited in Claim 7 or 8, **characterized in that** said translatable load floor (32) is translated forwardly of and substantially flush with said fixed load floor (20) when said second back portion (16) is in said forward position.
